# FASCICULE DE BREVET EUROPEEN

(11) **EP 1 928 068 B1**
(45) Date de publication et mention de la délivrance du brevet: **06.03.2019**
(21) Numéro de dépôt: 06360054.8
(22) Date de dépôt: 01.12.2006
(51) Int. Cl.: H02H 7/26, H02H 3/087, H02H 3/06

(54) **Système et procédé de détection de défauts électriques dans des vannes électrothermiques**
Systeme und Verfahren zur Fehlererfassung in elektrothermischen Ventilen
System and method of detecting electrical faults in electrothermal valves

(43) Date de publication de la demande: 04.06.2008
(73) Titulaire: Hager Controls SAS, 67703 Saverne (FR)
(72) Inventeur: Paillard, Jean-Noël, 67000 Strasbourg (FR)
(74) Mandataire: Nuss, Laurent

(56) Documents cités:
- EP-A1- 0 209 765
- WO-A-01/41277
- FR-A1- 2 788 381
- GB-A- 2 182 812
- JP-A- 3 256 515

## Description

La présente invention concerne un système et un procédé de détection de défauts électriques de type court-circuit et surcharge dans au moins une parmi des vannes électrothermiques ou équivalent. Selon un exemple préférentiel, qui servira de fil conducteur au texte qui suit, ces vannes sont utilisées dans le cadre d'une installation de plancher chauffant/refroidissant.

L'invention est alors intégrée à un système plus vaste de régulation de ces planchers.

En l'occurrence, les vannes commandées sont alimentées en basse tension continue, par exemple en 24 volts. Le nombre de vannes à commander dépend en réalité de la surface du sol à équiper d'un système de régulation de température.

Les vannes sont dotées de moyens de commande propres qui confèrent à l'ensemble une souplesse d'utilisation compatible avec les exigences actuelles en matière de confort. Ainsi, il est par exemple possible de collecter des informations, par exemple des consignes de température ou des températures effectivement atteintes localement, à différents emplacements du local équipé du système de l'invention, et d'utiliser ces données pour piloter la température de portions distinctes du plancher (et par conséquent les différentes vannes qui y sont associées) en fonction de la destination, de l'orientation, voire des volumes surmontant lesdites portions.

Ces vannes, bien que présentant un haut niveau de fiabilité, peuvent tomber en panne au cours de la vie de l'installation. Un mauvais branchement au moment du montage peut également se produire. Il est ainsi possible qu'elles subissent des courts-circuits, ou encore que le courant qu'elles consomment soit supérieur à leur courant maximum admissible et qu'elles soient alors en surcharge, obérant leur fiabilité à long terme.

Dans les systèmes actuellement connus, les problèmes de surcharge ne sont pas gérés. Si cela arrive simultanément pour plusieurs vannes, le courant global consommé par le système peut devenir supérieur au courant maximal pour lequel l'alimentation du système a été initialement définie. Cette dernière n'est alors plus en mesure de répondre à la charge et l'ensemble du système cesse de fonctionner.

Le second problème mentionné, celui du court-circuit, est actuellement géré de deux façons différentes dans les systèmes commercialisés. Selon un premier cas, la protection est globale, c'est-à-dire qu'un défaut de court-circuit d'une des vannes entraîne l'arrêt de l'ensemble de l'installation. Une intervention de l'installateur est alors nécessaire pour identifier la ou les vannes en défaut, afin de procéder à son ou leur remplacement avant remise en route de l'installation.

Dans un second cas, une protection individuelle est mise en oeuvre. Les vannes comportent chacune une électronique de commande qui leur est propre. Dans l'hypothèse d'un court-circuit, l'électronique de commande d'une seule vanne casse. L'ensemble du système continue par conséquent à fonctionner, à l'exception de la voie de la vanne en question. Une zone du plancher n'est donc plus fonctionnelle, et l'utilisateur n'est nullement informé de ce défaut.

Selon un troisième type de configuration, il existe des systèmes qui détectent individuellement les courts-circuits. Chaque commande individuelle des vannes est alors autoprotégée, ce qui conduit à un surcoût élevé pour l'installation.

Un système de contrôle des charges avec une protection contre les surcharges et le court-circuits est divulgué dans le document GB 2 182 812.

La présente invention se propose de remédier à ces inconvénients, en proposant un système dans lequel l'information concernant le défaut, qu'il soit de court-circuit ou de surcharge, est détectée et rendue accessible à l'utilisateur. Le système continue d'ailleurs à fonctionner après identification de la voie ou des voies en défaut, et le remplacement de l'organe éventuellement défectueux permet dans la solution de l'invention le rétablissement dudit système sans intervention particulière d'un installateur.

Pour remplir ces objectifs, ainsi que d'autres qui apparaîtront dans la suite de la description, le système de détection de l'invention, permettant la mise en évidence d'un court-circuit ou d'une surcharge dans au moins une parmi des vannes électrothermiques, et comportant une alimentation en basse tension continue et des moyens de commande des vannes, se caractérise à titre principal en ce qu'il comprend :
- des moyens de lecture du courant global permanent parcourant les vannes ;
- des moyens de détection d'un courant global maximal admissible ;
- des moyens de limitation du courant global transitoire ;
- des moyens de coupure/rétablissement de l'alimentation ; et
- une unité centrale de traitement apte à commander les moyens de coupure/rétablissement de l'alimentation en réponse à la détection du courant maximal admissible.

Au départ, l'alimentation est établie, permettant la circulation du courant dans les différentes voies, c'est-à-dire dans les différentes vannes. L'unité centrale de traitement gère les moyens de commande des vannes en fonction des informations reçues notamment par les thermostats. L'ensemble fonctionne tant que le courant global est inférieur au seuil admissible. Dès lors que ce seuil est franchi, les procédés de détection selon l'invention, qui seront vus en détail ci-après, permettent de déterminer s'il s'agit d'un court-circuit ou d'une surcharge, puis de localiser la voie dans laquelle le défaut s'est produit, de l'indiquer à l'utilisateur et de remettre en marche le reste du système.

Le système de détection de l'invention est en fait un circuit électronique complexe permettant la gestion des différentes informations du système, et dont les charges sont à titre principal les différentes vannes électrothermiques.

Selon une configuration possible, les moyens de commande des vannes électrothermiques consistent en un transistor MOS dont la grille est commandée par l'unité centrale et dont la charge est constituée d'au moins une vanne.

L'unité centrale est par conséquent en mesure d'activer ou de désactiver la voie comportant la ou les vannes, par simple commande du transistor qui pilote cette voie.

De même, selon une possibilité, les moyens de coupure/rétablissement de l'alimentation consistent en au moins un transistor par exemple MOS polarisé pour être passant en fonctionnement normal, dont la grille est commandée par un signal issu des moyens de détection du courant maximal admissible, et relié aux sorties des transistors de commande des vannes.

Ce transistor MOS constitue en fait un interrupteur global, qui gère l'ouverture ou la fermeture du circuit, et permet l'alimentation ou l'absence d'alimentation des différentes vannes, tout au moins celles dont les moyens de commande sont activés.

Par ailleurs, les moyens de lecture du courant global parcourant les vannes peuvent être constitués d'au moins une résistance shunt de puissance placée en série dans le circuit d'alimentation des vannes.

La gestion des court-circuits reste un problème crucial, car la valeur du courant transitoire immédiatement après l'apparition d'un court-circuit est théoriquement infinie et par conséquent susceptible de détruire le transistor MOS servant d'interrupteur global. Il faut donc limiter dans la mesure du possible ce courant transitoire à une valeur finie supportable par ledit interrupteur, avant de procéder rapidement à la coupure du circuit, le transistor n'étant pas capable de supporter ce courant même limité pendant très longtemps. Il faut en fait constituer un seuil de courant transitoire admissible avec un temps de réaction nul.

A cet effet, selon une possibilité, un transistor bipolaire dont la base est polarisée par la résistance shunt est connecté à la grille du ou des transistor(s) MOS de coupure de l'alimentation, en vue de limiter le courant transitoire dans le cas d'un court-circuit ou d'une surcharge. Il permet notamment d'éviter la destruction dudit ou desdits transistor(s) MOS.

En d'autres termes, dès que la tension aux bornes de la résistance shunt dépasse la tension de seuil de la jonction base-émetteur dudit transistor bipolaire, celui-ci devient conducteur, et si son collecteur est par exemple relié à la grille du ou des transistor(s) MOS réalisant l'interrupteur global, il y a limitation du courant dans l'interrupteur global à une valeur inférieure au courant transitoire maximal admissible dans l'interrupteur global.

Le seuil définissant le courant maximal permanent admissible, avec un temps de réaction non nul, peut être obtenue en régulant une tension d'alimentation des composants du système, la tension de référence obtenue produisant au moins un courant de référence correspondant à au moins un courant maximal par application à au moins un pont résistance/capacité.

En fait, la possibilité ouverte par l'invention de détecter des courts-circuits d'une part, et des surcharges d'autre part, entraîne en pratique l'utilisation de deux tensions de référence constituant deux seuils.

Les moyens de détection du courant maximal admissible peuvent comporter au moins un comparateur dont l'une des entrées est alimentée par le courant de référence constituant le courant maximal admissible, et l'autre entrée est reliée à la résistance shunt de puissance.

Là encore, compte tenu des deux fonctions assurées par l'invention, impliquant deux types de détection, il y a en pratique deux comparateurs alimentés par deux courants de référence distincts, correspondant respectivement à la détection de court-circuit et de surcharge. La détection de court-circuit précède toujours la détection éventuelle d'une surcharge, comme on le verra dans la suite.

La mémorisation de l'information selon laquelle le courant de court-circuit du système est supérieur au courant maximal admissible étant nécessaire pour la gestion de l'ensemble par l'unité centrale, la sortie du comparateur correspondant est reliée à un étage de mémorisation lui-même connecté à l'unité centrale. De préférence, cet étage de mémorisation est constitué d'une bascule D à deux portes NAND. Le temps de réaction de l'unité centrale n'est dans la plupart des cas pas suffisant pour que l'ordre d'ouverture de l'interrupteur global provienne de l'unité centrale. L'ouverture se fait donc électroniquement immédiatement après détection, par le transistor MOS constituant l'interrupteur global. Mais l'unité centrale doit être avertie de l'ouverture et la mémoriser.

Pour préserver les composants du système, il est cependant important que les transistors MOS, que ce soit ceux qui sont utilisés dans la commande des vannes électrothermiques ou celui ou ceux utilisé(s) comme interrupteur global, supportent un courant supérieur au courant maximal admissible.

De préférence encore, l'unité centrale de traitement est constituée d'un microcontrôleur.

Enfin, selon une possibilité, le système de l'invention comporte des moyens de visualisation de défaut appliqués à chaque vanne. De préférence, ces moyens de visualisation consistent en une diode électroluminescente attachée à chaque voie, c'est-à-dire à chacune des vannes. Ces diodes électroluminescentes sont gérées par l'unité centrale de traitement et conduisent à un avantage tout à fait considérable du système de l'invention puisque l'installateur (ou l'utilisateur) peut immédiatement procéder à la réparation de la voie qui dysfonctionne puisqu'il l'identifie.

Comme cela a été mentionné auparavant, l'invention concerne également un procédé de détection de courts-circuits ou de surcharges dans au moins une parmi des vannes électrothermiques, utilisant un système de détection tel que décrit auparavant, et qui se caractérise par les étapes suivantes :
- lecture permanente du courant global ;
- comparaison du courant global avec le courant maximal admissible ;
- en cas de détection d'un courant global supérieur au courant maximal admissible, activation des moyens de coupure de l'alimentation ;
- mémorisation de cette détection en vue d'une lecture par l'unité centrale de traitement ;
- commande par l'unité centrale de la désactivation de la totalité des vannes ;
- rétablissement de l'alimentation ;
- commande par l'unité centrale de l'activation séquentielle et successive des vannes ;
- lecture du courant dans chaque vanne ;
- comparaison dudit courant avec le courant maximal admissible ;
- en cas de détection d'un courant supérieur au courant maximal admissible au cours de l'activation d'une vanne, activation des moyens de coupure de l'alimentation ;
- mémorisation par l'unité centrale de la vanne en court-circuit ;
- commande de la désactivation de cette vanne ;
- rétablissement de l'alimentation ;
- en l'absence de court-circuit, comparaison du courant avec un seuil de surcharge ;
- en cas de détection d'une surcharge, commande de la désactivation de cette vanne ;
- reprise de l'examen individuel des vannes jusqu'à la dernière;
- tentatives périodiques de pilotage de la ou des vannes en défaut par l'unité centrale.

Comme évoqué ci-dessus, la commande de la désactivation d'une vanne se double de l'activation de moyens de visualisation de la vanne en défaut.

La lecture de la méthodologie utilisée pour détecter les courts-circuits et les surcharges montre que la recherche des courts-circuits précède toujours celle des surcharges : en cas de court-circuit dans une seule vanne, le courant maximal admissible est dépassé et il faut ouvrir l'interrupteur global, faute de quoi le système risque d'être endommagé.

Une surcharge isolée n'implique pas que le courant global soit supérieur au courant maximal admissible par le système et son traitement local par désactivation de la voie touchée suffit.

Parmi les avantages résultant du système et des procédés de détection de l'invention, il est à noter qu'aucun matériel ne peut être endommagé avec le système de l'invention, comme cela se produit parfois lorsque la protection d'un tel système est insuffisante.

La ou les voies en défaut sont toujours isolées, rendant possible le fonctionnement du reste du système, lequel peut se rétablir sans intervention particulière, après remplacement de l'organe défectueux, ou après retour à un état satisfaisant si le défaut n'est que temporaire.

L'invention va à présent être décrite plus en détail, en référence aux figures annexées, pour lesquelles :
- la figure 1 est constituée d'un schéma synoptique de l'installation objet de l'invention ; et
- la figure 2 représente un schéma électronique partiel d'une telle installation, sur lequel des blocs fonctionnels distincts ont été identifiés.

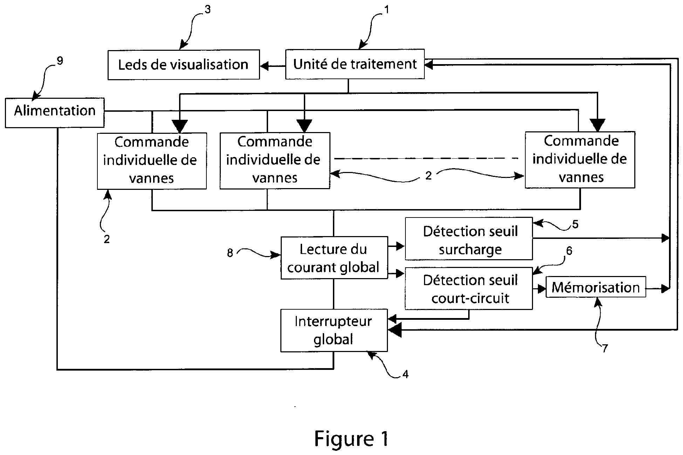

En référence à la figure 1, l'unité de traitement (1) gère d'une part les commandes habituelles des vannes (2) constituées comme on l'a vu par des transistors MOS, ainsi que les moyens de visualisation (3) constitués de diodes électroluminescentes, et enfin l'interrupteur global (4) également constitué de transistor(s) MOS. L'information qui remonte vers l'unité de traitement (1) provient des étages de détection du seuil de surcharge (5) et de détection du seuil du court-circuit (6), cette dernière information transitant par un étage de mémorisation (7).

Lesdits étages de détection (5, 6) sont alimentés par une information de courant provenant de l'étage de lecture du courant global (8), par exemple constitué par une résistance shunt de puissance. En entrée des étages de détection (5) et (6) se trouve par conséquent en permanence une valeur qui correspond au courant global parcourant le système, à supposer bien sûr que l'alimentation (9) soit établie, ce qui implique que l'interrupteur global (4) ne soit pas ouvert.

Comme cela a été mentionné auparavant, l'interrupteur global (4) est fermé au départ, et le courant circule dans toutes les vannes dont les commandes (2) sont activées par l'unité de traitement (1), c'est-à-dire en principe les vannes qui ne présentent pas de défaut. Dès lors qu'un défaut survient, et qu'il y a détection d'un courant global supérieur au courant global maximal admissible, l'unité de traitement se charge de localiser et d'isoler la vanne en défaut et sa commande (2) est désactivée.

En réalité, la détection du seuil de surcharge n'est pas faite par le microcontrôleur (1) tant qu'un défaut de court-circuit n'est pas détecté. En d'autres termes, la détection d'un défaut commence par une détection d'un courant global supérieur à un seuil admissible, opéré par l'étage (6) et mémorisé par l'étage (7). Il y a donc prééminence de cette détection, qui constitue la détection de court-circuit, par rapport à la détection du seuil de surcharge (5), qui n'est pas mémorisée et qui précise le cas échéant la première détection. Il est d'ailleurs à noter que, dès détections d'un courant maximal trop élevé par l'étage de détection seuil du court-circuit (6), l'interrupteur global (4) est immédiatement forcé en ouverture par le circuit sans attendre une commande émanant de l'unité de traitement (1). Celle-ci ne gère le problème que lorsqu'elle le découvre au cours de la gestion normale de ses tâches.

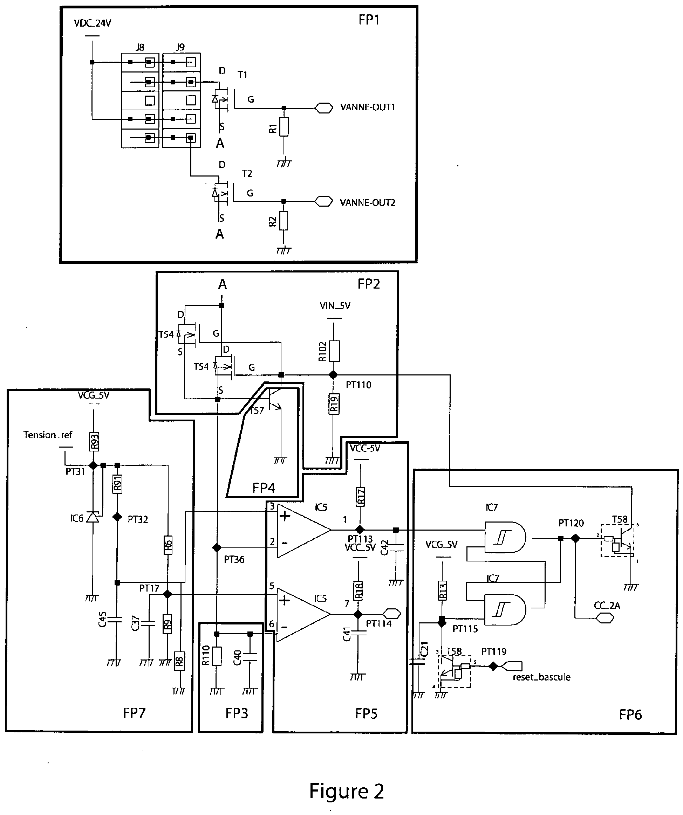

En référence à la figure 2, seules deux commandes individuelles de vannes sont représentées, à titre d'exemple, pour des vannes connectées à des borniers (J8) et (J9) dans le bloc FP1. Il est bien entendu possible de gérer en parallèle un nombre bien plus élevé de vannes. Les différentes fonctions ou moyens généraux de l'invention sont représentés en figure 2, dans des blocs FP1 à FP7.

L'unité de traitement (1) envoie des ordres numériques 1 ou 0 sur les connexions vanne-out 1 et vanne-out 2. Les transistors MOS T1 ou T2 correspondant s'ouvrent ou se ferment selon cette commande. Cet étage de commande individuelle des vannes se trouve dans le bloc FP1. Chaque transistor MOS T1, T2, etc... est connecté à l'interrupteur global (4) via la connexion (A).

Les résistances R1 et R2 permettent de polariser les transistors T1 et T2 à l'état fermé en l'absence de commande, par exemple lors du démarrage du produit.

L'interrupteur global (4) est représenté dans le bloc FP2.

Il comporte en l'espèce deux interrupteurs MOS T54 en parallèle (l'emploi d'un seul est également possible), avec en série une résistance R110 disposée en parallèle avec une capacité C40, ces deux composants apparaissant dans le bloc FP3 montrant l'étage de lecture du courant global (8).

Pour en revenir au bloc FP2, les résistances R19 et R102 permettent de polariser le ou les transistor(s) MOS T54 à l'état fermé en fonctionnement normal. La commande de la grille G de ces transistors T54 provient comme on le verra plus tard de la sortie (puis de la mémorisation) de l'étage de détection d'un courant global supérieur au courant maximal admissible.

Lorsqu'un court-circuit survient, le courant instantané est extrêmement élevé. Pour éviter la destruction des transistors T54, un étage de protection est ajouté, qui apparaît dans le bloc FP4. Il s'agit d'un transistor bipolaire T57 dont la base est connectée aux bornes de la résistance R110 du bloc FP3. Dès que le courant devient trop élevé, et que la tension aux bornes de cette résistance R110 dépasse la résistance base-émetteur du transistor T57, celui-ci devient passant et limite le courant à un niveau acceptable dans les transistors T54 de l'interrupteur global (4).

L'étage de détection (5, 6) apparaît dans le bloc FP5, et il doit être envisagé en liaison avec le bloc FP7 qui fournit les tensions de référence pour la détection d'un court-circuit d'une part, et d'une surcharge d'autre part.

Le circuit monté dans le bloc FP7 permet la génération de ces deux tensions de référence à partir d'une tension d'alimentation de l'ordre de 5 volts utilisée pour l'alimentation des différents composants du circuit électronique, régulée par une diode ZENER. Cette tension régulée est ensuite adaptée en deux tensions de référence ou de seuil distinctes alimentant les entrées + des comparateurs IC5, via deux ponts résistance/capacité. La tension de référence permettant la détection d'un court-circuit est obtenue au moyen d'un pont constitué d'une résistance R91 et d'une capacité C45. La tension de référence utilisée pour la détection de la surcharge est obtenue via un pont constitué d'une part d'une résistance R6, et d'autre part de la mise en parallèle d'un condensateur C37 et d'une résistance R9.

L'autre entrée de chacun des comparateurs IC5 du bloc FP5 est reliée à l'étage de lecture du courant global (8) montré au bloc FP3, c'est-à-dire aux bornes de la résistance R110.

La sortie des comparateurs, en principe à 1 en cas de fonctionnement normal, passe à 0 lorsqu'un court-circuit ou une surcharge est détectée.

La sortie du comparateur permettant la détection d'un court-circuit est reliée à une bascule D apparaissant dans le bloc FP6 illustrant l'étage de mémorisation (7). Cette bascule D est constituée de deux portes NAND IC7, permettant de garder l'information de court-circuit, c'est-à-dire en première intention de dépassement d'une valeur admissible de courant, à destination de l'unité centrale de traitement (1).

La sortie de cet étage, c'est-à-dire l'information sur l'existence d'un courant trop élevé dans le circuit, est également répercutée sur les grilles des transistors MOS T54 du bloc FP2, lesquels transistors sont alors bloqués. Cette information est en fait envoyée via un étage amplificateur constitué d'un transistor bipolaire T58 polarisé en amplificateur.

Pour annuler la mémoire constituée de la bascule D, il suffit d'envoyer un signal de RESET via le transistor T58. Cette information est envoyée par l'unité centrale de traitement (1).

D'autres configurations de circuit électronique peuvent bien entendu être appliquées à la réalisation des mêmes fonctions. L'exemple ci-dessus ne doit nullement être considéré comme limitatif de la présente invention. De même, ce type de circuit peut être appliqué à la commande de moteurs, de voyants de relais et plus généralement de tout type de charges appropriées.

## Revendications

1. Système de détection de court-circuit et de surcharge dans au moins une parmi des vannes électrothermiques comportant une alimentation (9) en basse tension continue et des moyens de commande (2) des vannes, le système comprenant:
- des moyens de lecture (8) du courant global permanent parcourant les vannes ;
- des moyens de détection (5, 6) d'un courant global maximal admissible ;
- des moyens de limitation du courant global transitoire ;
- des moyens de coupure/rétablissement (4) de l'alimentation ; et
- une unité centrale de traitement (1) apte à commander les moyens de coupure (4) de l'alimentation (9) en réponse à la détection du courant maximal admissible,
les moyens de commande (2) des vannes étant gérés par l'unité centrale de traitement (1), et caractérisé en les moyens de commande (2) des vannes électrothermiques consistant en un transistor MOS (T1, T2...) dont la grille est commandée par l'unité centrale (1) et dont la charge est constituée d'au moins une vanne et les moyens de coupure/rétablissement (4) de l'alimentation consistant en au moins un transistor MOS (T54) polarisé pour être passant en fonctionnement normal, dont la grille est commandée par un signal en sortie des moyens de détection (5, 6) du courant maximal admissible, et relié aux sorties des transistors (T1, T2...) de commande des vannes.

2. Système de détection selon la revendication précédente, **caractérisé en ce que** les moyens de lecture (8) du courant global parcourant les vannes sont constitués d'au moins une résistance shunt (R110) de puissance placée en série dans le circuit d'alimentation des vannes.

3. Système de détection selon les revendications 1 et 2, **caractérisé en ce que** les moyens de limitation du courant global transitoire consistent en un transistor bipolaire (T57) dont la base est polarisée par la résistance shunt (R110) est connecté à la grille du ou des transistor(s) MOS (T54) de coupure / rétablissement de l'alimentation, en vue de bloquer ce ou ces dernier(s) dès qu'il(s) devien(nen)t passant(s).

4. Système de détection selon l'une quelconque des revendications précédentes, **caractérisé en ce que** la valeur de courant constituant le courant maximal admissible est obtenue en régulant une tension d'alimentation des composants du système, la tension de référence résultant produisant au moins un courant de référence correspondant à au moins un courant maximal admissible par application à au moins un pont résistance / capacité (R91, C45 ; R6, C37, R9).

5. Système de détection selon les revendications 1 à 4, **caractérisé en ce que** les moyens de détection du courant maximal admissible comportent au moins un comparateur (IC5) dont l'une des entrées est alimentée par le courant de référence constituant le courant maximal admissible, et l'autre entrée est reliée à la résistance shunt (R110) de puissance.

6. Système de détection selon la revendication précédente, **caractérisé en ce que** les moyens de détection (5, 6) comportent deux comparateurs (IC5) alimentés par deux courants de référence distincts, respectivement pour la détection de court-circuit et de surcharge.

7. Système de détection selon la revendication 5, **caractérisé en ce que** la sortie du comparateur (IC5) de détection de court-circuit (6) est reliée à un étage de mémorisation (7) de son état ensuite connecté à l'unité centrale (1).

8. Système de détection selon la revendication précédente, **caractérisé en ce que** l'étage de mémorisation (7) est constitué d'une bascule D à deux portes NAND (IC7).

9. Système de détection selon l'une quelconque des revendications 1 à 8, **caractérisé en ce que** les transistors MOS (T54, T57, T1, T2) supportent un courant supérieur au courant maximal admissible.

10. Système de détection selon l'une quelconque des revendications précédentes, **caractérisé en ce que** l'unité centrale de traitement (1) est constituée d'un microcontrôleur.

11. Système de détection selon l'une quelconque des revendications précédentes, **caractérisé en ce qu'**il comprend des moyens de visualisation de défaut appliqués à chaque vanne.

12. Système de détection selon la revendication précédente, **caractérisé en ce que** les moyens de visualisation consistent en une diode électroluminescente attachée à chaque circuit de vanne.

13. Procédé de détection individualisée de court-circuit ou de surcharge dans au moins une parmi des vannes électrothermiques utilisant en système de détection selon les revendications précédentes, **caractérisé par** les étapes suivantes :
- lecture permanente du courant global ;
- comparaison du courant global avec le courant maximal admissible ;
- en cas de détection d'un courant global supérieur au courant maximal admissible, activation des moyens de coupure (4) de l'alimentation ;
- mémorisation de cette détection en vue d'une lecture par l'unité centrale de traitement (1) ;
- commande par l'unité centrale (1) de la désactivation de la totalité des vannes ;
- rétablissement de l'alimentation (9) ;
- commande par l'unité centrale (1) de l'activation séquentielle et successive des vannes ;
- lecture du courant dans chaque vanne ;
- comparaison dudit courant avec le courant maximal admissible ;
- en cas de détection d'un courant supérieur au courant maximal admissible au cours de l'activation d'une vanne, activation des moyens de coupure (4) de l'alimentation (9) ;
- mémorisation par l'unité centrale (1) de la vanne en court-circuit ;
- commande de la désactivation de cette vanne ;
- rétablissement de l'alimentation (9) ;
- en l'absence de court-circuit, comparaison du courant avec un seuil de surcharge ;
- en cas de détection d'une surcharge, commande de la désactivation de cette vanne ;
- reprise de l'examen individuel des vannes jusqu'à la dernière ;
- tentatives périodiques de pilotage de la ou des vannes en défaut par l'unité centrale (1).

14. Procédé de détection selon la revendication précédente, **caractérisé en ce que** la commande de la désactivation d'une vanne se double de l'activation de moyens de visualisation de la vanne en défaut.

## Patentansprüche

1. System zur Kurzschluss- und Überlasterfassung in mindestens einem von mehreren elektrothermischen Ventilen, umfassend eine Niedergleichspannungsversorgung (9) und Steuermittel (2) der Ventile, wobei das System umfasst:
- Mittel zum Ablesen (8) des Gesamtdauerstroms, der durch die Ventile strömt;
- Mittel zum Erfassen (5, 6) des maximal zulässigen Gesamtstroms;
- Mittel zum Begrenzen des Gesamtübergangsstroms;
- Mittel zum Unterbrechen/Wiederherstellen (4) der Versorgung; und
- eine zentrale Verarbeitungseinheit (1), die geeignet ist, die Mittel zum Unterbrechen (4) der Versorgung (9) als Antwort auf die Erfassung des maximal zulässigen Stroms zu steuern,
wobei die Steuermittel (2) der Ventile von der zentralen Verarbeitungseinheit (1) verwaltet werden,
und **dadurch gekennzeichnet ist, dass** die Steuermittel (2) der elektrothermischen Ventile aus einem MOS-Transistor (T1, T2, ...) bestehen, dessen Gate von der zentralen Einheit (1) gesteuert wird, und dessen Last von mindestens einem Ventil gebildet ist, und dass die Mittel zum Unterbrechen/Wiederherstellen (4) der Versorgung aus mindestens einem MOS-Transistor (T54) bestehen, der polarisiert ist, um im Normalbetrieb leitend zu sein, dessen Gate von einem Signal am Ausgang der Mittel zum Erfassen (5, 6) des maximal zulässigen Stroms gesteuert wird, und der an die Ausgänge der Transistoren (T1, T2, ...) zur Steuerung der Ventile angeschlossen ist.

2. Erfassungssystem nach dem vorhergehenden Anspruch,
**dadurch gekennzeichnet,**
**dass** die Mittel zum Ablesen (8) des Gesamtstroms, der durch die Ventile strömt, von mindestens einem Shunt-Leistungswiderstand (R110) gebildet sind, der in Reihe in der Versorgungsschaltung der Ventile angeordnet ist.

3. Erfassungssystem nach den Ansprüchen 1 und 2,
**dadurch gekennzeichnet,**
**dass** die Mittel zum Begrenzen des Gesamtübergangsstroms aus einem bipolaren Transistor (T57) bestehen, dessen Basis durch den Shunt-Widerstand (R110) polarisiert ist und der an das Gate des oder der MOS-Transistors(en) (T54) zur Unterbrechung/Wiederherstellung der Versorgung angeschlossen ist, um diesen oder diese letztgenannten zu blockieren, wenn er(sie) leitend wird (werden).

4. Erfassungssystem nach einem der vorhergehenden Ansprüche,
**dadurch gekennzeichnet,**
**dass** der Stromwert, der den maximal zulässigen Gesamtstrom darstellt, erhalten wird, indem eine Versorgungsspannung der Komponenten des Systems geregelt wird, wobei die resultierende Referenzspannung mindestens einen Referenzstrom, der mindestens einem maximal zulässigen Strom entspricht, durch Anlegen an mindestens eine Widerstands-/Kapazitätsbrückenschaltung (R91; C45; R6, C37, R9) erzeugt.

5. Erfassungssystem nach den Ansprüchen 1 bis 4,
**dadurch gekennzeichnet,**
**dass** die Mittel zum Erfassen des maximal zulässigen Stroms mindestens einen Komparator (IC5) umfassen, bei dem einer der Eingänge mit dem Referenzstrom, der den maximal zulässigen Strom darstellt, versorgt wird, und der andere Eingang mit dem Shunt-Leistungswiderstand (R110) verbunden ist.

6. Erfassungssystem nach dem vorhergehenden Anspruch,
**dadurch gekennzeichnet,**
**dass** die Erfassungsmittel (5, 6) zwei Komparatoren (IC5) umfassen, die mit zwei verschiedenen Referenzströmen versorgt werden, jeweils zur Erfassung eines Kurzschlusses bzw. einer Überlast.

7. Erfassungssystem nach Anspruch 5,
**dadurch gekennzeichnet,**
**dass** der Ausgang des Komparators (IC5) zum Erfassen eines Kurzschlusses (6) mit einer Speicherstufe (7) seines Zustands, die dann an die Zentraleinheit (1) angeschlossen wird, verbunden ist.

8. Erfassungssystem nach dem vorhergehenden Anspruch,
**dadurch gekennzeichnet,**
**dass** die Speicherstufe (7) von einem Flip-Flop D mit zwei NAND-Gattern (IC7) gebildet ist.

9. Erfassungssystem nach einem der Ansprüche 1 bis 8,
**dadurch gekennzeichnet,**
**dass** die MOS-Transistoren (T54, T57, T1, T2) einem stärkeren Strom als den maximal zulässigen Strom standhalten.

10. Erfassungssystem nach einem der vorhergehenden Ansprüche,
**dadurch gekennzeichnet,**
**dass** die zentrale Verarbeitungseinheit (1) durch einen Mikrokontroller gebildet ist.

11. Erfassungssystem nach einem der vorhergehenden Ansprüche,
**dadurch gekennzeichnet,**
**dass** es Fehleranzeigemittel umfasst, die an jedem Ventil angewandt werden.

12. Erfassungssystem nach dem vorhergehenden Anspruch,
**dadurch gekennzeichnet,**
**dass** die Anzeigemittel in einer Leuchtdiode bestehen, die an jeder Ventilschaltung angebracht ist.

13. Verfahren zur individualisierten Erfassung eines Kurzschlusses oder einer Überlast in mindestens einem unter mehreren elektrothermischen Ventilen unter Verwendung eines Erfassungssystems nach den vorhergehenden Ansprüchen, **gekennzeichnet durch** die folgenden Schritte:
- permanentes Ablesen des Gesamtstroms;
- Vergleichen des Gesamtstroms mit dem maximal zulässigen Strom;
- im Falle einer Erfassung eines größeren Gesamtstroms als der maximal zulässige Strom Aktivierung der Mittel zur Unterbrechung (4) der Versorgung;
- Speichern dieser Erfassung im Hinblick auf ein Ablesen durch die zentrale Verarbeitungseinheit (1);
- Steuern der Deaktivierung der Gesamtheit der Ventile durch die Zentraleinheit (1);
- Wiederherstellung der Versorgung (9);
- Steuern der sequentiellen und aufeinanderfolgenden Aktivierung der Ventile durch die Zentraleinheit (1);
- Ablesen des Stroms in jedem Ventil;
- Vergleichen des Stroms mit dem maximal zulässigen Strom;
- im Falle einer Erfassung eines größeren Stroms als der maximal zulässige Strom während der Aktivierung eines Ventils Aktivierung der Mittel zur Unterbrechung (4) der Versorgung (9);
- Speichern des kurzgeschlossenen Ventils bei Kurzschluss durch die Zentraleinheit (1);
- Steuern der Deaktivierung dieses Ventils;
- Wiederherstellung der Versorgung (9);
- bei Nichtvorhandensein eines Kurzschlusses Vergleichen des Stroms mit einer Überlastgrenze;
- im Falle der Erfassung einer Überlast Steuern der Deaktivierung dieses Ventils;
- Wiederaufnahme der individuellen Prüfung der Ventile bis zum letzten;
- periodische Versuche der Steuerung des oder der fehlerhaften Ventile durch die Zentraleinheit (1).

14. Erfassungsverfahren nach dem vorhergehenden Anspruch, **dadurch gekennzeichnet, dass** die Steuerung der Deaktivierung eines Ventils mit der Aktivierung von Anzeigemitteln des fehlerhaften Ventils einhergeht.

## Claims

1. System for detecting short circuits and overloads in at least one of several electrothermal valves having a low-voltage DC power supply (9) and means (2) for commanding the valves, the system comprising:
- means (8) for reading the overall constant current flowing through the valves;
- means (5, 6) for detecting a maximum admissible overall current;
- means for limiting the overall transient current;
- means (4) for cutting off/restoring the power supply; and
- a central processing unit (1) able to command the means (4) for cutting off the power supply (9) in response to the detection of the maximum admissible current,
the means (2) for commanding the valves being managed by the central processing unit (1), and **characterized in**
the means (2) for commanding the electrothermal valves consisting of a MOS transistor (T1, T2...) whose gate is commanded by the central unit (1) and whose load is formed by at least one valve, and
the means (4) for cutting off/restoring the power supply consisting of at least one MOS transistor (T54) biased so as to be in the on state during normal operation, whose gate is commanded by a signal at the output of the means (5, 6) for detecting the maximum admissible current, and who is connected to the outputs of the transistors (T1, T2...) for commanding the valves.

2. Detection system according to the preceding claim, **characterized in that** the means (8) for reading the overall current flowing through the valves are formed of at least one power shunt resistor (R110) placed in series in the circuit for supplying power to the valves.

3. Detection system according to Claims 1 and 2, **characterized in that** the means for limiting the overall transient current consist of a bipolar transistor (T57) whose base is biased by the shunt resistor (R110) and who is connected to the gate of the MOS transistor(s) (T54) for cutting off/restoring the power supply, for the purpose of putting said MOS transistor (s) into the off state as soon as it (they) change(s) to the on state.

4. Detection system according to any one of the preceding claims, **characterized in that** the current value forming the maximum admissible current is obtained by adjusting a supply voltage to the components of the system, the resulting reference voltage producing at least one reference current corresponding to at least one maximum admissible current by application to at least one resistor/capacitor bridge (R91, C45; R6, C37, R9).

5. Detection system according to Claims 1 to 4, **characterized in that** the means for detecting the maximum admissible current include at least one comparator (IC5) one of the inputs of which is supplied with the reference current that forms the maximum admissible current, and the other input of which is connected to the power shunt resistor (R110).

6. Detection system according to the preceding claim, **characterized in that** the detection means (5, 6) include two comparators (IC5) supplied with two separate reference currents, for the short circuit detection and the overload detection, respectively.

7. Detection system according to Claim 5, **characterized in that** the output of the comparator (IC5) for detecting short circuits (6) is connected to a stage (7) for storing its state that is then connected to the central unit (1).

8. Detection system according to the preceding claim, **characterized in that** the storage stage (7) consists of a D flip-flop having two NAND gates (IC7).

9. Detection system according to any one of Claims 1 to 8, **characterized in that** the MOS transistors (T54, T57, T1, T2) withstand a current greater than the maximum admissible current.

10. Detection system according to any one of the preceding claims, **characterized in that** the central processing unit (1) is formed of a microcontroller.

11. Detection system according to any one of the preceding claims, **characterized in that** it comprises fault-viewing means applied to each valve.

12. Detection system according to the preceding claim, **characterized in that** the viewing means consist of a light-emitting diode attached to each valve circuit.

13. Method for the individual detection of short circuits or overloads in at least one of several electrothermal valves using in a detection system according to the preceding claims, **characterized by** the following steps:
- constant reading of the overall current;
- comparison of the overall current with the maximum admissible current;
- in the event of detection of an overall current greater than the maximum admissible current, activation of the means (4) for cutting off the power supply;
- storage of this detection for the purpose of being read by the central processing unit (1);
- commanding of the deactivation of all of the valves by the central unit (1);
- restoration of the power supply (9);
- commanding of the sequential and successive activation of the valves by the central unit (1);
- reading of the current in each valve;
- comparison of said current with the maximum admissible current;
- in the event of detection of a current greater than the maximum admissible current during the activation of a valve, activation of the means (4) for cutting off the power supply (9);
- storage of the short-circuited valve by the central unit (1);
- commanding of the deactivation of this valve;
- restoration of the power supply (9);
- in the absence of a short circuit, comparison of the current with an overload threshold;
- in the event of detection of an overload, commanding of the deactivation of this valve;
- resumption of the individual examination of the valves until the last one;
- periodic attempting to drive the defective valve(s) by the central unit (1).

14. Detection method according to the preceding claim, **characterized in that** the command to deactivate a valve is coupled with the activation of means for viewing the defective valve.
